# EUROPÄISCHE PATENTSCHRIFT

(11) **EP 3 513 235 B1**
(45) Veröffentlichungstag und Bekanntmachung des Hinweises auf die Patenterteilung: **07.06.2023**
(21) Anmeldenummer: 17768456.0
(22) Anmeldetag: 18.09.2017
(51) Int. Cl.: G02B 21/00

(54) **LICHTMIKROSKOP**
LIGHT MICROSCOPE
MICROSCOPE OPTIQUE

(30) Priorität: 16.09.2016 DE 102016117522
(43) Veröffentlichungstag der Anmeldung: 24.07.2019
(73) Patentinhaber: Leica Microsystems CMS GmbH, 35578 Wetzlar (DE)
(72) Erfinder: FAHRBACH, Florian, 69115 Heidelberg (DE)
(74) Vertreter: Schaumburg und Partner Patentanwälte mbB
(86) Internationale Anmeldenummer: PCT/EP2017/073455
(87) Internationale Veröffentlichungsnummer: WO 2018/050888

(56) Entgegenhaltungen:
- EP-A2- 2 775 472
- WO-A2-2013/009414
- WO-A2-2015/109323
- DE-A1- 10 337 296
- DE-A1-102006 011 277
- US-A1- 2012 140 240
- Rolf T. Borlinghaus: "Spectral Imaging", , 9. Dezember 2011 (2011-12-09), XP055429239, Gefunden im Internet: URL:https://www.leica-microsystems.com/sci ence-lab/spectral-imaging/ [gefunden am 2017-11-27]
- Unknown: "Multichannel System Filter Selection", , 1. Januar 2010 (2010-01-01), XP055427831, Gefunden im Internet: URL:https://www.photometrics.com/resources /technotes/pdfs/filters_technote.pdf [gefunden am 2017-11-22]
- MATTHEW B. BOUCHARD ET AL: "Swept confocally-aligned planar excitation (SCAPE) microscopy for high-speed volumetric imaging of behaving organisms - Supplementary Information", NATURE PHOTONICS, 19. Januar 2015 (2015-01-19), Seiten 1-22, XP055427410, UK ISSN: 1749-4885, DOI: 10.1038/nphoton.2014.323

## Beschreibung

Die Erfindung betrifft ein Lichtmikroskop nach Anspruch 1 und ein Verfahren zur lichtmikroskopischen Abbildung einer Probe nach Anspruch 13.

Insbesondere in der Fluoreszenzmikroskopie kommen in jüngerer Zeit Mikroskopierverfahren zur Anwendung, bei denen die Probe mit einer flächig oder linienförmig ausgedehnten Lichtverteilung beleuchtet wird. Beispiele hierfür sind unter den Bezeichnungen SPIM (Single Plane Illumination Microscopy), OPM (Oblique Plane Microscopy) und SCAPE (Swept Confocally-Aligned Planar Excitation) bekannte Mikroskopierverfahren. So wird etwa bei einem SPIM-Mikroskop ein Beleuchtungslichtbündel z.B. mit Hilfe einer Zylinderlinse nur in einer ersten Richtung fokussiert und ist somit senkrecht zu dieser ersten Richtung ausgedehnt, wodurch die Probe mit einem Lichtblatt oder einer Lichtscheibe beleuchtet wird, die innerhalb der Probe nur eine Probenebene ausleuchtet. Ein SPIM-Mikroskop weist für die Beleuchtung und die Detektion probenseitig zwei separate Objektive auf, deren optische Achsen senkrecht zueinander verlaufen. Die abzubildende Probenebene liegt senkrecht zur optischen Achse des Detektionsobjektivs. Die Beleuchtung dieser Probenebene erfolgt durch das Lichtblatt, welches das Beleuchtungsobjektiv senkrecht zur optischen Achse des Detektionsobjektivs in die Probe einstrahlt.

Demgegenüber wird bei dem SCAPE-Verfahren ein einziges probenseitiges Objektiv sowohl zur Beleuchtung als auch zur Detektion verwendet. Die Beleuchtung erfolgt mit einem schräg zur optischen Achse des Objektivs liegenden Lichtblatt. Infolge dieser Schrägstellung des Lichtblatts weist ein SCAPE-Mikroskop üblicherweise eine mit dem Objektiv zusammenwirkende Aufrichtungsoptik mit schräg zueinander gestellten Teiloptiken auf, die über eine Zwischenabbildung dafür sorgen, dass der mit dem schräggestellten Lichtblatt beleuchtete Probenbereich lagerichtig auf den Detektor abgebildet wird.

Zur näheren Erläuterung der vorstehend genannten SPIM-, OPM- und SCAPE-Verfahren wird beispielhaft verwiesen auf die Veröffentlichungen Kumar, S. et al., High-speed 2D and 3D fluorescence microscopy of cardiac myocytes. Opt. Express 19, 13839 (2011); Dunsby, C., Optically sectioned imaging by oblique plane microscopy, Opt. Express 16, 20306-20316 (2008) und Bouchard, M.B. et al., Swept confocally-aligned planar excitation (SCAPE) microscopy for high speed volumetric imaging of behaving organisms, Nat. Photonics 9, 113-119 (2015) sowie auf die Patentdokumente US 8582203 B2 und US 8619237 B2.

Ein verwandtes Mikroskopierverfahren, das jedoch ohne Aufrichtungsoptik auskommt, ist das sogenannte HILO-Verfahren (Higly Inclined And Laminated Optical Sheet). Hierzu wird verwiesen aufTokunaga, M., Imamoto, N. & Sakata-Sogawa, K., Highly inclined thin illumination enables clear single-molecule imaging in cells., Nat. Methods 5, 159-161 (2008).

In der DE 10 2011 000 835 B4 wird das für eine Schrägbeleuchtung der Probe vorgesehene Lichtblatt mit Hilfe einer Scaneinheit erzeugt, die sich in einer zur rückwärtigen Fokusebene des Beleuchtungsobjektivs konjugierten Ebene befindet. Das zu detektierende Fluoreszenzlicht wird zwischen dem Objektiv und der Scaneinheit ausgekoppelt.

Zum Stand der Technik wird ferner auf die WO 2015/109323 A2 verwiesen, die u.a. einen Mikroskopaufbau zeigt, bei dem ein dichroitischer Spiegel zur Trennung des zu detektierenden Fluoreszenzlichts einem Scanspiegel in Lichtrichtung nachgeordnet ist, so dass das Fluoreszenzlicht von dem Scanspiegel direkt entscannt wird. Dieser Aufbau entspricht weitgehend dem Aufbau eines punktscannenden Konfokalmikroskops. Er unterscheidet sich von diesem jedoch zum einen dadurch, dass der Beleuchtungsstrahl schwach fokussiert und schräg in die Probe gerichtet ist. Zum anderen wird das aus dem schrägen, gegen die Fokusebene des Objektivs verlaufenden Linienfokus aufgesammelte Fluoreszenzlicht mit einer Aufrichtungsoptik aufgerichtet. Dadurch kann Bildinformation entlang der beleuchteten Linie mit Hilfe eines Liniensensors gewonnen werden. Da der Scanspiegel sowohl zum Scannen der Probe mit dem Beleuchtungsstrahl als auch zum Entscannen des detektierten Fluoreszenzlichtes verwendet wird, kann ein ortsfester Detektor eingesetzt werden. Ein entsprechender Mikroskopaufbau ist auch in der US 2012/140240 A1 beschrieben.

Eine spezielle Herausforderung stellt in der Lichtblattmikroskopie die gleichzeitige Aufnahme von Bildern in verschiedenen Wellenlängenbereichen dar. Für ein Lichtblattmikroskop, das für die Beleuchtung und die Detektion separate Objektive vorsieht, wurde hierfür eine Lösung vorgeschlagen in Jahr et al., Hyperspectral light sheet microscopy; Nat. Commun. 6, 7990 (2015). Dabei ist jedoch zusätzlich zu einem ersten Scanspiegel im Beleuchtungsstrahlengang, der zum Scannen des Beleuchtungsstrahls über die Probe verwendet wird, ein weiterer Scanspiegel im baulich getrennten Detektionsstrahlengang notwendig, der zum Descannen des aus dem beleuchteten Bereich stammenden Fluoreszenzlichtes notwendig ist, damit das Fluoreszenzlicht auf eine ortsfeste Linie abgebildet werden und schlussendlich spektral aufgespalten werden kann. Die beiden getrennten Scanspiegel müssen synchronisiert werden, was technisch aufwändig und anfällig gegenüber Störungen ist.

Auch für OPM- und SCAPE-Anwendungen, in denen ein einziges probenzugewandtes Objektiv für Beleuchtung und Detektion vorgesehen ist, gibt es Lösungen zur gleichzeitigen Bildaufnahme in verschiedenen Wellenlängenbereichen. So wird in der WO 2015/109323 A2 und in der vorstehend genannten Veröffentlichung von Dunsby zur Abbildung mehrerer Farbstoffe vorgeschlagen, das aus der Probe stammende Detektionslicht über dichroitische Strahlteiler aufzuspalten und auf verschiedene Detektoren zu lenken. Jedoch ist dies eigentlich nur mit zwei Farben und festen Wellenlängenbereichen praktikabel. Denn zum einen ist die Flexibilität eingeschränkt, da für eine Änderung der Wellenlängenbereiche die dichroitischen Strahlteiler und ggf. vorhandene Filter getauscht werden müssen. Insbesondere der Wechsel eines dichroitischen Strahlteilers ist problematisch, da dessen Ausrichtung die Position des Bildes auf dem Detektor beeinflusst. Die Zahl der gleichzeitig erfassbaren Wellenlängenbereiche ist dabei limitiert durch die Zahl der dichroitischen Strahlteiler bzw. die Zahl der Detektoren.

Außerdem ist zu beachten, dass die Mindestbandbreite von herkömmlich eingesetzten Dichroiten und Filtern derzeit bei etwa 20 nm liegt, was wesentlich über der Breite der Emissions-Spektren typischer Dioden und Festkörperlaser liegt. Insbesondere kann die Breite der Filter für spezielle Anwendungen schon zu groß sein. Erfolgt beispielsweise eine Bildaufnahme mithilfe zweier Fluorophore, so ist es ein Problem, wenn die Anregungslichtquelle für eines der Fluorophore im Emissionsbereich des anderen Fluorophors liegt. In diesem Fall wird bei einer angenommenen Bandbreite von 20 nm durch Trennung des Fluoreszenzlichts mittels eines Dichroiten bzw. durch Blocken des Anregungslichts durch ein Sperrfilter ein Wellenlängenbereich von 20 nm aus dem Detektionslicht ausgeschnitten, wodurch sich das messbare Signal deutlich reduziert. Dieses Problem ergibt sich auch für die Detektion mittels eines Flächendetektors, wie in der oben genannten Veröffentlichung von Jahr et al. beschrieben ist. Auch dort muss das Anregungslicht im Detektionsstrahlengang geblockt werden, damit es nicht auf den Detektor fällt. Hierfür müssen Multibandsperrfilter mit herstellungsbedingter Mindestbreite eingesetzt werden, die auch weite Bereiche des Emissionsspektrums blockieren.

Bei der im Stand der Technik der Technik vorgeschlagenen Lösung ist also die spektrale Auflösung durch die Mindestbandbreite der Dichroiten bzw. Bandpassfilter stark beschränkt. Außerdem ist für die Anpassung des detektierten Spektralbereichs ein mechanischer Wechsel der genannten optischen Komponenten erforderlich, was zeitaufwendig ist und eine hohe Anzahl an Komponenten erfordert. Überlappen die Emissionsspektren verschiedener in der Probe enthaltener Farbstoffe, so ist eine spektrale Entmischung erforderlich, um die Beiträge der verschiedenen Farbstoffe zum gemessenen Signal zu trennen und korrekt zuzuordnen. Eine dieser Entmischung entsprechende Entfaltung ist schwierig.

Der Erfindung liegt die Aufgabe zugrunde, ein Lichtmikroskop und ein Verfahren anzugeben, die es bei einer lichtmikroskopischen Abbildung, bei der für die Beleuchtung und Detektion ein gemeinsames Objektiv verwendet wird, mit vergleichsweise geringem technischen Aufwand ermöglichen, gleichzeitig mehrere Probenbilder in verschiedenen, vorzugsweise flexibel einstellbaren Wellenlängenbereichen aufzunehmen.

Die Erfindung löst diese Aufgabe durch die Gegenstände der unabhängigen Ansprüche. Vorteilhafte Weiterbildungen sind in den abhängigen Ansprüchen sowie der folgenden Beschreibung angegeben.

Das erfindungsgemäße Lichtmikroskop umfasst die im Anspruch 1 angegebenen Merkmale.

Das Lichtmikroskop ist insbesondere in Anwendungen gewinnbringend einsetzbar, in denen für die Beleuchtung und die Detektion ein einziges, der Probe zugewandtes Objektiv verwendet wird, wie dies beispielsweise in einer SCAPE-Anwendung der Fall ist. Die Erfindung ermöglicht dort eine hyperspektrale Bildaufnahme, d.h. eine gleichzeitige Aufnahme einer Vielzahl von Bildern in eng beieinander liegenden Farbkanälen, d.h. Wellenlängenbereichen. Dabei können diese Wellenlängenbereiche über das sichtbare Spektrum hinaus bis in den Infrarot- und/oder Ultraviolettbereich reichen.

Unter dem erfindungsgemäßen Linienfokus ist eine linienartige Beleuchtungslichtverteilung zu verstehen, die in der Probe den gerade mit dem Beleuchtungslicht beaufschlagten Zielbereich definiert. Dementsprechend wird vorliegend das Bild, das die Detektionseinheit von dem mit dem Linienfokus beleuchteten Zielbereich erzeugt, als Linienbild bezeichnet. Es versteht sich von selbst, dass hierbei der Begriff "Linie" nicht in einem mathematischen Sinne als eindimensionales Objekt zu verstehen ist, das allein durch seine Längserstreckung charakterisiert ist, d.h. keinerlei Ausdehnung senkrecht zu seiner Längserstreckung aufweist. Vielmehr soll der Begriff "Linie" darauf hinweisen, dass die in Rede stehende Beleuchtungslichtverteilung - und entsprechend das daraus resultierende Bild - länglich oder langgestreckt in einem Sinne ist, dass ihre Ausdehnung in Längsrichtung diejenige in Querrichtung deutlich übersteigt. Der Linienfokus und das entsprechende Linienbild können somit insbesondere in Abgrenzung zu einer punktförmigen oder flächigen Abbildung als streifenförmig verstanden werden.

Die erfindungsgemäße Scan-Beleuchtungseinheit ist so ausgeführt, dass sie den Linienfokus quer, vorzugsweise senkrecht zur Lichtausbreitungsrichtung bewegen und so die Probe mit dem Linienfokus scannen, d.h. abtasten kann. Dementsprechend ist die Detektionseinheit als sogenannte Descanned-Einheit ausgebildet, d.h. als eine Einheit, die im Stande ist, das aus der Beleuchtung mit dem scannenden Linienfokus resultierende Detektionslicht zu de- oder entscannen. Dies bedeutet, dass die Descanned-Detektionseinheit derart auf das Detektionslicht wirkt, dass die dem Beleuchtungslichtstrahl durch die Scan-Beleuchtungseinheit vermittelte Scannbewegung in Bezug auf das Detektionslicht im Sinne einer Gegenwirkung aufgehoben wird, was zur Folge hat, dass der mit dem scannenden Linienfokus beleuchtete Zielbereich in Form eines ortsfesten Linienbildes abgebildet werden kann.

Hierzu weisen die Scan-Beleuchtungseinheit und die Descanned-Detektionseinheit ein gemeinsames Lichtablenkelement auf, das zum Scannen des Beleuchtungslichtstrahls und zum Entscannen des Detektionslichtes um zwei senkrecht zueinander liegende Achsen drehbar ist. In letzterer Ausführung ist das Ablenkelement ein 2D-Scanspiegel, beispielsweise ein Galvanometerspiegel oder ein mikromechanischer Spiegel (MEMS), der in einer zur hinteren Brennebene des Objektivs konjugierten Ebne angeordnet ist. Indem das Ablenkelement um eine erste der beiden vorstehend genannten Achsen gedreht wird, führen der an dem Ablenkelement reflektierte Beleuchtungslichtstrahl und damit der Linienfokus eine Scannbewegung aus, die im Ergebnis zur Erzeugung eines Lichtblatts in der Probe führt. Das durch den scannenden Linienfokus erzeugte Lichtblatt kann dann als Ganzes gleichsam durch die Probe geschoben werden, in dem das Lichtablenkelement um die andere der beiden genannten Achsen verkippt wird. Das Scannen der Probe mit dem Beleuchtungslichtstrahl und das Entscannen des aus der Probe emittierten Detektionslichtes erfolgen in der vorstehend beschriebenen Ausführungsform wie bei einem herkömmlichen Konfokalmikroskop, mit dem Unterschied, dass bei Letzterem die Probe punktweise beleuchtet und detektiert wird, während die vorliegende Erfindung eine linienweise Beleuchtung und Detektion vorsieht.

Die erfindungsgemäße Abbildung des mit dem bewegten Linienfokus beleuchteten Zielbereichs in Form eines ortsfesten Linienbildes ermöglicht es, die senkrecht zu diesem Linienbild liegende Richtung als Freiheitsgrad für die spektrale Aufspaltung des Detektionslichtes zu nutzen. Zu diesem Zweck verfügt die erfindungsgemäße Descanned-Detektionseinheit über ein dispersives Element, welches das Detektionslicht in verschiedene spektrale Anteile aufspaltet, die dann zur Erzeugung zweiter Linienbilder genutzt werden, die abgesehen von der in ihnen enthaltenen spektralen Information dem ersten Linienbild entsprechen. Auf diese Weise kann der gerade betrachtete Zielbereich gleichzeitig in mehreren Farbkanälen aufgenommen werden.

Das dispersive Element ist beispielsweise ein Prisma oder ein Beugungsgitter, das im Strahlengang des Detektionslichtes angeordnet ist. Die Erfindung ist jedoch nicht auf eine solche Ausführung beschränkt. So ist es etwa auch möglich, das dispersive Element als räumlichen Lichtmodulator, kurz SLM (Spatial Light Modulator), auszubilden, beispielsweise auf Basis von Flüssigkristallen auf Silicium (LCoS, Liquid Crystal on Silicon), die einerseits doppelbrechend sind und andererseits starke Dispersion zeigen. Ein solcher Lichtmodulator kann durch punktweise Steuerung der Orientierung der Flüssigkristalle die Phase von polarisiertem Detektionslicht ortsabhängig verzögern. Dadurch ist es möglich, Beugungsgitter mit unterschiedlichen Gitterperioden oder Prismen mit unterschiedlichen Winkeln zwischen ihren beiden brechenden Kanten zu simulieren, um unterschiedliche Dispersionen zu realisieren. Auf diese Weise kann die spektrale Auflösung den jeweils zu beachtenden Erfordernissen wie Aufnahmegeschwindigkeit und Empfindlichkeit angepasst werden.

Vorzugsweise liegt die Aufspaltungsrichtung des dispersiven Elementes senkrecht zur Längserstreckung des ersten Linienbildes. Dabei bezeichnet die genannte Aufspaltungsrichtung diejenige Richtung, längs der das dispersive Element das Detektionslicht räumlich auffächert.

Die Descanned-Detektionseinheit enthält vorzugsweise ein optisches Element, z.B. eine Linse, die ausgebildet ist, das Licht des ersten Linienbilds auf das dispersive Element zu lenken. Dieses optische Element sorgt vorzugsweise für eine Kollimation des Lichts, da sich das dispersive Element vorzugsweise in einer Ebene, in das Licht kollimiert ist, befindet. Des Weiteren wird das dispersive Element vorzugsweise großflächig ausgeleuchtet, in dem Sinne, dass eine für die gewünschte Anwendung ausreichende spektrale Auflösung des Lichts stattfinden kann.

In einer bevorzugten Ausführung weist die Descanned-Detektionseinheit eine Spaltblende auf, die am Ort des ersten Linienbildes angeordnet ist, wobei diese Spaltblende vorzugsweise parallel zur Längserstreckung des ersten Linienbildes orientiert ist. Die Breite der Spaltblende und die Stärke der wellenlängenabhängigen Aufspaltung des dispersiven Elements geben zusammen die effektive spektrale Auflösung vor.

In einer speziellen Ausgestaltung enthält die Descanned-Detektionseinheit zur Erfassung der zweiten Linienbilder mindestens einen als Flächendetektor ausgebildeten Sensor, auf dem die zweiten Linienbilder parallel zueinander erzeugt werden. Wird als dispersives Element, wie weiter oben erläutert, ein räumlicher Lichtmodulator eingesetzt oder falls das dispersive Element austauschbar ist, beispielsweise durch Anordnung mehrerer dispersiver Elemente in einer Vorrichtung zum Austauschen dieser Elemente wie beispielsweise einem Schieber, so lässt sich die spektrale Aufspaltung des Detektionslichtes flexibel den Abmessungen des Flächendetektors anpassen. Dies lässt sich beispielsweise nutzen, um bei Bedarf die maximal mögliche spektrale Auflösung zu erzielen. Eine solche Anpassung ist jedoch auch in der Weise möglich, dass eine unnötig große Auffächerung des Detektionslichtes auf dem Flächendetektor vermieden wird, beispielsweise um durch einen kleineren auszulesenden Detektorbereich die Auslesegeschwindigkeit zu erhöhen oder zur Verbesserung des Signal-Rausch-Verhältnisses die Stärke des von dem Flächendetektor erfassten Signals zu erhöhen.

In einer alternativen Ausführungsform enthält die Descanned-Detektionseinheit zur Erfassung der zweiten Linienbilder mehrere jeweils als Liniendetektor ausgebildete Sensoren, auf denen jeweils eines der zweiten Linienbilder erzeugt wird. In diesem Fall wird jedem zweiten Linienbild ein eigener Liniendetektor zugeordnet. Dabei korrespondiert die räumliche Anordnung der Liniendetektoren mit der spektralen Aufspaltung des Detektionslichtes, die durch das dispersive Element bewirkt wird.

Die Erfindung ist jedoch nicht darauf beschränkt, entweder ausschließlich Flächendetektoren oder ausschließlich Liniendetektoren zur Erfassung der durch das dispersive Element räumlich voneinander getrennten Linienbilder zu verwenden. So ist ebenso eine Kombination aus Flächen- und Liniendetektoren denkbar.

In einer besonders bevorzugten Ausführung enthält die Descanned-Detektionseinheit mindestens eine anamorphotische Optik (wie beispielsweise eine Zylinderlinse), die einem der Sensoren vorgeordnet ist und deren optische Wirkung in Aufspaltungsrichtung des dispersiven Elementes der Ausdehnung des Sensors in Aufspaltungsrichtung angepasst ist. Eine solche anamorphotische Optik ist insbesondere in Kombination mit einem als Liniendetektor ausgebildeten Sensor von Vorteil. In diesem Fall ist die anamorphotische Optik beispielsweise so ausgeführt, dass ihre Vergrößerung in Richtung der Längserstreckung des Liniendetektors gleich 1 ist, so dass sie in dieser Richtung neutral wirkt, während sie in Aufspaltungsrichtung verkleinernd wirkt. Dadurch wird die spektrale Information, die in der selektierten, dem Liniendetektor zugeordneten spektralen Bande enthalten ist, auf den Liniendetektor komprimiert. Anders formuliert besteht also die Möglichkeit, mit Hilfe einer solchen anamorphotischen Optik Linienbilder unterschiedlicher Farbe bzw. Wellenlänge auf einen gemeinsamen Sensor wie einen Liniendetektor abzubilden und die Abmessungen der Abbildung für die Abmessungen eines solchen Sensors zu optimieren: Das dispersive Element spaltet das Detektionslicht spektral auf und erzeugt dabei aus einem multispektralen (farbigen) Linienbild eine Vielzahl von Linienbildern, wobei die Lage der Linienbilder senkrecht zur Längsrichtung der Linienbilder von der Farbe/Wellenlänge des jeweiligen Linienbildes abhängt. Mit Hilfe der anamorphotischen Optik kann ein Teil dieser Menge von Linienbildern auf einen Zeilensensor abgebildet werden, wobei entlang der Achse der spektralen Aufspaltung komprimiert wird, während entlang der Bildachse, wie oben bereits beschreiben, eine Eins-zu-Eins-Abbildung stattfindet.

In einer speziellen Ausführung sind die Liniendetektoren in einer Ebene parallel zueinander angeordnet. Mit einer entsprechenden Umlenkung der durch das dispersive Element aufgefächerten spektralen Anteile des Detektionslichtes ist es jedoch ebenso möglich, die Liniendetektoren beliebig im Raum zu verteilen, um eine gewünschte Detektoranordnung zu erhalten.

Vorzugsweise ist mindestens einer der genannten Sensoren in einer Richtung verschiebbar, die der Aufspaltungsrichtung des dispersiven Elementes entspricht.

Dadurch lässt sich in besonders einfacher Weise der spektrale Anteil des Detektionslichtes, der durch den jeweiligen Sensor erfasst werden soll, über dessen Position einstellen.

In einer besonders bevorzugten Ausführung enthält die Descanned-Detektionseinheit mindestens ein Lichtumlenkelement, das einen Teil des durch das dispersive Element aufgespaltenen Detektionslichtes auf einen der Sensoren umlenkt. Vorzugsweise ist dieses Lichtumlenkelement in einer Richtung verschiebbar, die der Aufspaltungsrichtung des dispersiven Elementes entspricht.

Vorzugsweise sind mehrere Lichtumlenkelemente vorgesehen, die das aufgespaltene Detektionslicht sukzessive von einer Seite her oder abwechselnd von zwei entgegengesetzten Seiten her jeweils auf einen der Sensoren umlenken. Das durch das dispersive Element aufgefächerte Detektionslicht wird in diesen Ausführungsformen von einem Rand bzw. alternierend von beiden Rändern des durch das dispersive Element aufgefächerten Detektionslichtes her in separate Strahlengänge ausgekoppelt und dort den jeweiligen Sensoren zugeführt.

Die Descan-Detektionseinheit enthält mindestens ein Lichtsperrelement, das spektrale Anteile des Detektionslichtes, die im Wellenlängenbereich des Beleuchtungslichtstrahls liegen, sperrt. Dieses Lichtsperrelement hat insbesondere in einer fluoreszenzmikroskopischen Anwendung, in welcher der Beleuchtungslichtstrahl das Anregungslicht und das Detektionslicht die durch das Anregungslicht ausgelöste Fluoreszenzstrahlung repräsentiert, die Funktion, das an der Probe reflektierte Anregungslicht von der zu erfassenden Fluoreszenzstrahlung zu trennen. So weist das reflektierte Anregungslicht in der Regel eine deutlich höhere Intensität als die zu messende Fluoreszenzstrahlung auf. Um zu verhindern, dass das Anregungslicht auf den Detektor bzw. die Detektoren fällt, filtert das Lichtsperrelement das Anregungslicht aus dem Detektionslicht heraus. Das Lichtsperrelement ist beispielsweise als Bandpassfilter ausgeführt, das im Detektionsstrahlengang dem dispersiven Element vorgeordnet ist.

Das Lichtsperrelement ist dem dispersiven Element auch nachgeordnet und dadurch in einem Bereich des Detektionsstrahlengangs angeordnet, in dem das Detektionslicht durch das dispersive Element schon in seine verschiedenen spektralen Anteile aufgefächert ist. Das Lichtsperrelement ist in diesem Fall in Aufspaltungsrichtung des dispersiven Elementes verschiebbar. Dadurch lässt sich in besonders einfacher Weise der Wellenlängenbereich, der durch das Lichtsperrelement aus dem Detektionslicht herauszufiltern ist, flexibel einstellen.

Das Lichtsperrelement ist beispielsweise aus einem dünnen, transparenten Substrat gebildet, der einen oder mehrere intransparente Bereiche aufweist, die das auftreffende Detektionslicht absorbieren oder reflektieren. Die Reflexion erfolgt dabei idealerweise nicht zurück in den Strahlengang des Detektionslichtes, sondern in Richtung einer Lichtfalle.

In einer besonders bevorzugten Ausführung ist eine Anordnung vorgesehen, die mehrere in dem spektral aufgefächerten Detektionslicht hintereinander angeordnete Lichtsperrelemente vorstehend genannter Art umfasst. Jedes dieser Lichtsperrelemente weist wiederum einen oder mehrere das Licht absorbierende oder reflektierende Bereiche auf dem transparenten Substrat auf. Indem die Substrate in Aufspaltungsrichtung des dispersiven Elementes gegeneinander verschoben werden, lässt sich eine Vielzahl von Wellenlängenbereichen einstellen, die aus dem Detektionslicht herausgefiltert werden. Die Anzahl der in Aufspaltungsrichtung gegeneinander verschiebbaren Lichtsperrelemente ist frei wählbar. Typischerweise wird für jeden Anregungswellenlängenbereich ein eigenes Lichtsperrelement vorgesehen.

Eine weitere mögliche Ausführung beinhaltet mindestens ein Lichtsperrelement und/oder Lichtumlenkelement, das eine Anordnung aus abschnittsweise senkrecht zur Aufspaltungsrichtung des dispersiven Elements schaltbaren Spiegelelementen oder Reflektoren (insbesondere Mikrospiegelaktoren wie beispielsweise DMDs (Digital Mirror Devices), aber auch LCoS-Modulatoren) beinhaltet. Diese weisen mindestens zwei Stellungen auf, wobei vorzugsweise in zumindest einer Stellung das auftreffende Detektionslicht in Richtung mindestens eines Detektors reflektiert wird. In der zumindest einen anderen Stellung wird das auftreffende Detektionslicht durch die Spiegelelemente oder Reflektoren in eine andere Richtung reflektiert (beispielsweise in Richtung einer Strahlfalle oder eines weiteren Detektors), blockiert oder alternativ auch transmittiert. Durch eine solche Anordnung kann folglich gezielt Detektionslicht eines auswählbaren Wellenlängenbereiches detektiert werden. Alternativ oder zusätzlich ist natürlich auch eine Variante dieser Ausführung denkbar, in der durch die Anordnung transmittiertes Detektionslicht auf einen Detektor geleitet wird. Eine solche Variante muss nicht zwingend die Möglichkeit zur Detektion des von der Anordnung reflektierten Detektionslichts beinhalten.

Die Erfindung wird im Folgenden anhand der Figuren näher erläutert. Darin zeigen:
- Fig. 1: ein SCAPE-Mikroskop in einem y-z-Schnitt;
- Fig. 2: das SCAPE-Mikroskop nach Figur 1 in einem x-z-Schnitt;
- Fig. 3: eine Abwandlung des SCAPE-Mikroskops mit einem y-z-Schnitt;
- Fig. 4: die Abwandlung des SCAPE-Mikroskops in einem x-z-Schnitt;
- Fig. 5: eine weitere Abwandlung des SCAPE-Mikroskops in einem y-z-Schnitt;
- Fig. 6: die weitere Abwandlung des SCAPE-Mikroskops in einem x-z-Schnitt;
- Fig. 7: ein erfindungsgemäßes hyperspektrales Detektormodul, das Teil der Detektionseinheit des SCAPE-Mikroskops gemäß den Figuren 1 bis 6 ist, wobei dieses Ausführungsbeispiel einen Flächendetektor aufweist;
- Fig. 8: ein weiteres Ausführungsbeispiel des hyperspektralen Detektormoduls mit mehreren Liniendetektoren;
- Fig. 9: ein weiteres Ausführungsbeispiel des hyperspektralen Detektormoduls mit mehreren Liniendetektoren;
- Fig. 10: ein weiteres Ausführungsbeispiel des hyperspektralen Detektormoduls mit mehreren Liniendetektoren;
- Fig. 11: ein weiteres Ausführungsbeispiel des hyperspektralen Detektormoduls, in dem anstelle eines Bandpassfilters mehrere gegeneinander verschiebbare Lichtsperrelemente vorgesehen sind;
- Fig. 12: eine von mehreren Funktionseinheiten zum Aufbau des hyperspektralen Detektormoduls, wobei diese Funktionseinheit eine anamorphotische Optik und einen Zeilen- oder Flächendetektor aufweist;
- Fig. 13: eine von mehreren Funktionseinheiten zum Aufbau des hyperspektralen Detektormoduls, wobei diese Funktionseinheit eine Lichtfalle aufweist;
- Fig. 14: die Funktionseinheit gemäß Figur 12 in einer Darstellung, welche die Funktionsweise der anamorphotischen Optik veranschaulicht; und
- Fig. 15: eine Funktionseinheit ohne anamorphotische Optik als Vergleichsbeispiel.

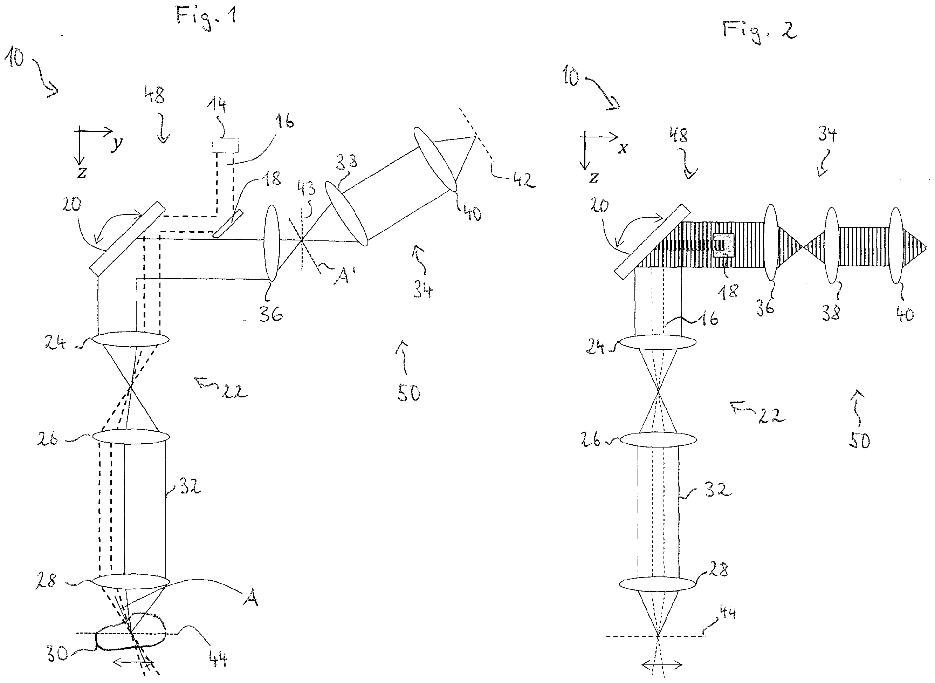

Zunächst wird anhand der Figuren 1 und 2 der Aufbau eines SCAPE-Mikroskops 10 erläutert, auf den im Weiteren zur Erläuterung der erfindungsgemäßen Ausführungsbeispiele referenziert wird. In den Figuren 1 und 2 sowie allen weiteren Figuren wird jeweils auf ein orthogonales Koordinatensystem mit den Achsen x, y und z Bezug genommen.

Wie in den Figuren 1 und 2 gezeigt, enthält das SCAPE-Mikroskop 10 eine Lichtquelle 14, die einen Beleuchtungslichtstrahl 16 aussendet. Der Beleuchtungslichtstrahl 16 trifft auf einen Spiegel 18, der den Beleuchtungslichtstrahl 16 in Richtung eines 2D-Scanspiegels 20 reflektiert. Der beispielsweise als Galvanometerspiegel oder MEMS-Spiegel ausgeführte Scanspiegel 20 ist sowohl um die x-Achse (in Figur 1 senkrecht zur Zeichenebene) als auch um die y-Achse (in Figur 2 senkrecht zur Zeichenebene) mittels eines in den Figuren nicht gezeigten Antriebs verkippbar. Der an dem Scanspiegel 20 reflektierte Beleuchtungslichtstrahl 16 gelangt in eine Optik 22, die aus einer Scanlinse 24, einer Tubuslinse 26 und einem Objektiv 28 gebildet ist. Der Scanspiegel 20 befindet sich in einer zur hinteren Fokusebene des Objektivs 28 konjugierten Ebene. Der Scanspiegel 20 und die Optik 22 bilden ein telezentrisches System.

Wie in Figur 1 gezeigt, fällt der Beleuchtungslichtstrahl 16 so auf den Scanspiegel 20, dass er längs der y-Achse versetzt als kollimierter Strahl in das Objektiv 28 eingestrahlt wird. Der Beleuchtungslichtstrahl 16 leuchtet demnach nur einen außermittigen Teilbereich der Eintrittspupille des Objektivs 28 aus, wodurch er innerhalb einer Probe 30 verkippt gegenüber der optischen Achse des Objektivs 28 propagiert. Das Objektiv 28 fokussiert den Beleuchtungslichtstrahl 16 nur schwach, so dass sich in der Probe 30 eine langgestreckte und schräggestellte Beleuchtungslichtverteilung ausbildet, die im Weiteren als Linienfokus bezeichnet wird. Der Linienfokus beleuchtet die Probe 30 in einem linien- bzw. streifenförmigen Zielbereich A, der in Figur 1 nur rein schematisch dargestellt ist, und regt dort die Probe 30 zur Emission von Fluoreszenzstrahlung an. Zur Vereinfachung der Darstellung ist die Probe 30 nur in Figur 1 gezeigt.

Das Verkippen des Scanspiegels 20 um die y-Achse führt in der Probe 30 zu einem Parallelversatz des Linienfokus längs in Richtung der x-Achse, so dass der Linienfokus die Probe in dieser Richtung scannt, d.h. abtastet. Durch diese scannende Bewegung des Linienfokus quer zur Lichtausbreitungsrichtung, d.h. quer zur Beleuchtungsachse wird gleichsam ein Lichtblatt aufgebaut. Indem der Scanspiegel 20 um die x-Achse verkippt wird, kann dieses Lichtblatt in Richtung der y-Achse durch die Probe 30 bewegt werden.

Die in der Probe 30 durch den Linienfokus ausgelöste Fluoreszenzstrahlung, im Weiteren als Detektionslicht 32 bezeichnet, gelangt wiederum in das Objektiv 30, das somit sowohl als Beleuchtungsobjektiv als auch als Detektionsobjektiv fungiert. Das Detektionslicht 32 fällt nach Durchtritt durch die Tubuslinse 26 und die Scanlinse 24 auf den Scanspiegel 20, der das Detektionslicht 32 so reflektiert, dass dieses an dem Spiegel 18 vorbeiläuft und in eine Aufrichtungsoptik 34 gelangt. Die Aufrichtungsoptik 34 umfasst ein zweites Objektiv 36, ein drittes Objektiv 38 sowie eine Tubuslinse 40. Durch die Rückführung auf den Abtastspiegel 20 wird das Detektionslicht 32 ähnlich wie bei einem konfokalen Mikroskop entscannt. Auf diese Weise wird der beleuchtete Zielbereich A im Wege einer Zwischenabbildung in der Aufrichtungsoptik 34 in einen ortsfestes, linienartiges Zwischenbild A' abgebildet. Das Zwischenbild A' ist gegenüber einer Ebene 43 schräggestellt, die optisch konjugiert zu der in den Figuren 1 und 2 mit 44 bezeichneten Fokusebene der Optik 22 ist. Zur besseren Übersicht wurde exemplarisch nur der Detektionsstrahlengang für einen einzelnen Punkt entlang des Zielbereichs A eingezeichnet. Selbstverständlich werden aber alle Punkte entlang des Zielbereichs A nebeneinander auf den Sensor 42 abgebildet.

Wie in Figur 1 gezeigt, umfasst die Aufrichtungsoptik 34 eine erste Teiloptik in Form des Objektivs 36 sowie eine hierzu schräggestellte zweite Teiloptik, die aus dem Objektiv 38 und der Tubuslinse 40 gebildet ist. Diese beiden schräg zueinander gestellten Teiloptiken 36 bzw. 38, 40 bewirken, dass das Zwischenbild A' lagerichtig in ein Linienbild 42 umgesetzt wird.

Bei einem herkömmlichen SCAPE-Mikroskop würde das so erzeugte Linienbild 42 direkt auf einen Liniendetektor abgebildet. Demgegenüber sieht die Erfindung vor, das Linienbild 42 in einem hyperspektralen Detektormodul, das in den Figuren 1 und 2 nicht dargestellt ist, durch eine spektrale Aufspaltung des Detektionslichts 32 in mehrere Linienbilder unterschiedlicher spektraler Zusammensetzung aufzuspalten. Das vorgenannte Detektormodul wird weiter unten im Einzelnen beschrieben.

Wie weiter oben erwähnt, empfängt das Objektiv 28 sowohl den von der Lichtquelle 14 emittierten Beleuchtungslichtstrahl 16 als auch das aus der Probe 30 stammende Detektionslicht 32. Das Objektiv 28 ist somit sowohl Teil einer in den Figuren 1 und 2 allgemein mit 48 bezeichneten Beleuchtungseinheit, die neben dem Objektiv 28 die Komponenten 14, 18, 20 und 22 umfasst, als auch Teil einer in den Figuren 1 und 2 allgemein mit 50 bezeichneten Detektionseinheit, die neben dem Objektiv 28 die Komponenten 22, 20, 36 und 34 umfasst. Somit ist auch der 2D-Scanspiegel 20 sowohl Teil der Beleuchtungseinheit 48 als auch Teil der Detektionseinheit 50. Wie vorstehend erläutert, hat der 2D-Scanspiegel 20 zum einen die Funktion, die Probe 30 mit dem Linienfokus A zu scannen, und zum anderen die Funktion, das aus der Probe 30 stammende Detektionslicht 32 zu entscannen, um den bewegten Linienfokus A in das ortsfeste Linienbild 42 umzusetzen. Dementsprechend lässt sich die Beleuchtungseinheit 48 als Scan-Einheit und die Detektionseinheit 50 als Descanned-Einheit verstehen.

An dieser Stelle ist darauf hinzuweisen, dass die Darstellung des Detektionsstrahlengangs in Figur 2 stark vereinfacht ist. Tatsächlich verläuft der zwischen dem Scanspiegel 20 und dem Objektiv 36 liegende Teil des Detektionsstrahlengangs senkrecht zur Zeichenebene der Figur 2, während der daran in Richtung des Zeilendetektors 42 anschließende Teil des Detektionsstrahlengangs schräg aus der Zeichenebene der Figur 2 heraus verläuft.

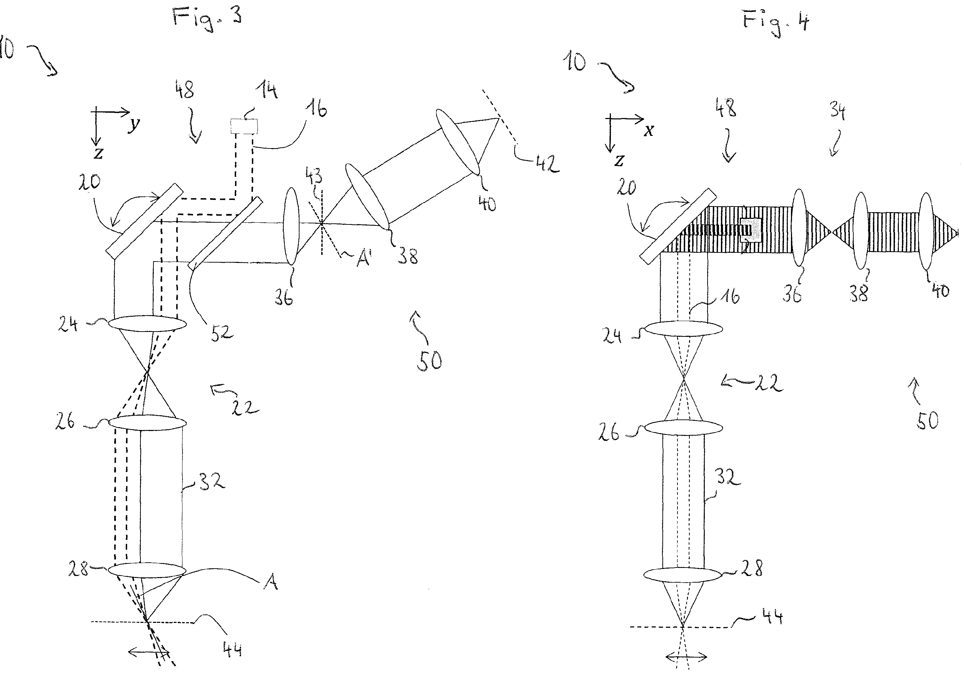

In den Figuren 3 und 4 ist in einem y-z-Schnitt bzw. einem x-z-Schnitt eine abgewandelte Ausführungsform dargestellt, die sich von der Ausführungsform gemäß den Figuren 1 und 2 lediglich dadurch unterscheidet, dass anstelle des Spiegels 18 ein dichroitischer Strahlteiler 52 vorgesehen ist. Dieser ist sowohl im Strahlengang des Beleuchtungslichtstrahls 16 als auch im Strahlengang des Detektionslichts 32 angeordnet. Der dichroitische Strahlteiler 52 ist so ausgebildet, dass er den Beleuchtungslichtstrahl 16 reflektiert und das Detektionslicht 32 transmittiert. Der dichroitische Strahlteiler 72 ist somit sowohl Teil der Beleuchtungseinheit 48 als auch Teil der Detektionseinheit 50.

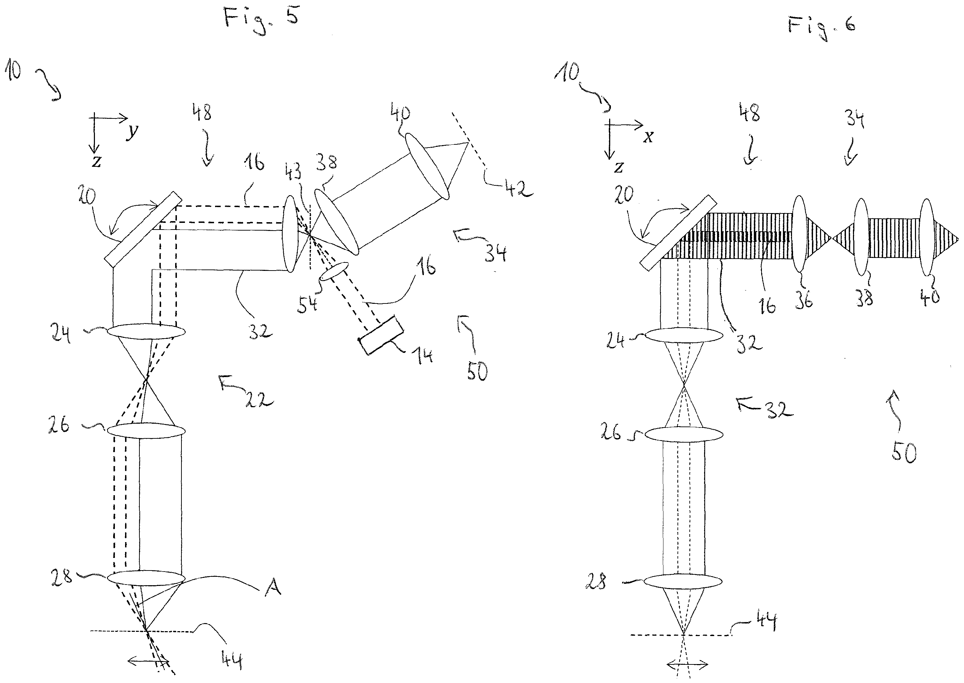

Die Figuren 5 und 6 zeigen in einem y-z-Schnitt bzw. einem x-z-Schnitt eine weitere Abwandlung des SCAPE-Mikroskops 10. In dieser Ausführungsform wird der von der Lichtquelle 14 emittierte Beleuchtungslichtstrahl 16 über das in der Aufrichtungsoptik 34 enthaltene Objektiv 36 in den Beleuchtungsstrahlengang eingekoppelt. Hierzu ist der Lichtquelle 14 eine Linse 54 vorgeordnet, die den Beleuchtungslichtstrahl 16 auf einen außermittigen Teilbereich der Eintrittspupille des Objektivs 36 richtet.

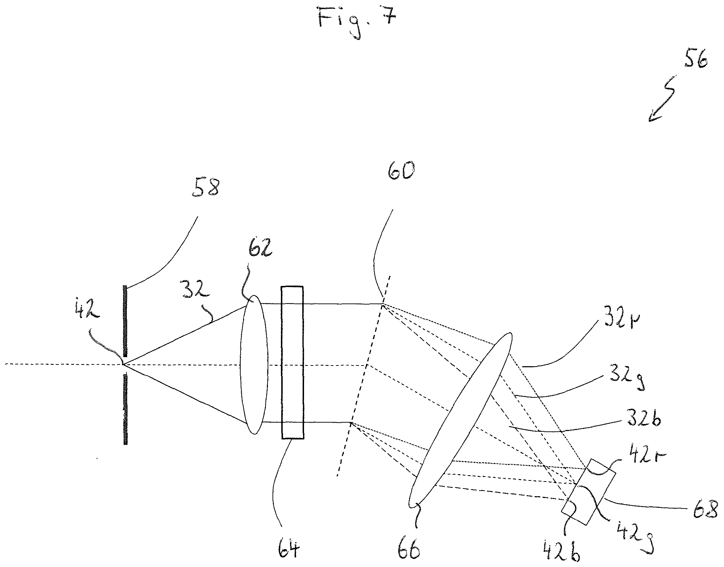

Im Folgenden wird erläutert, wie in der Detektionseinheit 50 des SCAPE-Mikroskops 10 gemäß den Figuren 1 bis 6 das Detektionslicht 32 spektral aufgespalten wird, um aus dem Linienbild 42 mehrere dem Linienbild 42 entsprechende Linienbilder unterschiedlicher spektraler Zusammensetzung zu generieren. Zum Zwecke der spektralen Aufspaltung verfügt die Detektionseinheit 50 über ein hyperspektrales Detektormodul 56, das in Figur 7 in einem Ausführungsbeispiel dargestellt ist.

Das Detektormodul 56 nach Figur 7 enthält eine Spaltblende 58, die sich am Ort des Linienbildes 42 befindet. In der Darstellung nach Figur 7 liegt die Richtung der Längserstreckung des Linienbildes 42 senkrecht zur Zeichenebene. Die Spaltblende 58 wirkt demnach als Feldblende, die für die optische Abbildung des Linienbildes 42 innerhalb des hyperspektralen Detektormoduls 56 eine scharfe Begrenzung definiert.

Das Detektormodul 56 enthält ein dispersives Element 60, das in Figur 7 rein schematisch durch eine gestrichelte Linie dargestellt ist. Das dispersive Element 60 ist beispielsweise ein Beugungsgitter, ein Prisma oder in einer besonders bevorzugten Ausführungsform ein räumlicher Lichtmodulator. Um das Linienbild 42 auf das dispersive Element 60 abzubilden, enthält das Detektormodul 56 weiterhin eine Linse 62, die der Spaltblende 58 im Detektorstrahlengang nachgeordnet ist. Zwischen der Linse 62 und dem dispersiven Element 60 befindet sich ein Bandpassfilter 64, der ausgebildet ist, Licht im Wellenlängenbereich des Beleuchtungslichtstrahls 16 zu sperren. Der Bandpassfilter 64 verhindert somit, dass das durch den Beleuchtungslichtstrahl 16 repräsentierte Anregungslicht, welches an der Probe 30 reflektiert wird, in dem Detektormodul 56 erfasst wird.

Das dispersive Element 60 bewirkt eine spektrale Aufspaltung des durch den Bandpassfilter 64 getretenen Detektionslichts 32. Dabei liegt die Aufspaltungsrichtung des dispersiven Elementes 60 senkrecht zur Längserstreckung des Linienbilds 42, d.h. in Figur 7 in der Zeichenebene. In der in Figur 7 dargestellten Ausführungsform wird rein beispielhaft angenommen, dass das dispersive Element 60 das Detektionslicht 32 in einen roten Spektralanteil 32r, einen grünen Spektralanteil 32g und einen blauen Spektralanteil 32b aufspaltet. Die Spektralanteile 32r, 32g und 32b werden über eine weitere Linse 66 auf einen Flächendetektor 68 gerichtet.

In dem Ausführungsbeispiel nach Figur 7 werden also aus dem Linienbild 42 auf dem Flächendetektor 68 drei Linienbilder unterschiedlicher spektraler Zusammensetzung generiert, nämlich ein rotes Linienbild 42r, ein grünes Linienbild 42g und ein blaues Linienbild 42b. Die Linienbilder 42r, 42g und 42b sind auf dem Flächendetektor 68 in Aufspaltungsrichtung des dispersiven Elementes 60 parallel zueinander versetzt.

Wie weiter oben erwähnt, stellt die Ausbildung des dispersiven Elementes 60 in Form eines räumlichen Lichtmodulators eine ganz bevorzugte Ausführungsform dar. In dieser Ausführungsform ist es nämlich möglich, die durch das dispersive Element 60 bewirkte Aufspaltung nach Bedarf flexibel einzustellen. Ist beispielsweise eine besonders gute spektrale Auflösung gewünscht, so wird das dispersive Element 60 so eingestellt, dass es das Detektionslicht 32 unter Ausnutzung des gesamten Flächensensors 68 möglichst weit auffächert. Ist dagegen eine besonders hohe Auslesegeschwindigkeit des Flächendetektors 68 gewünscht, so können die durch das dispersive Element 60 bewirkte Auffächerung und damit der auf dem Flächendetektor 68 auszulesende Bereich entsprechend verkleinert werden. Auf diese Weise ist es auch möglich, das Signal-Rausch-Verhältnis des Flächendetektors 68 zu verbessern.

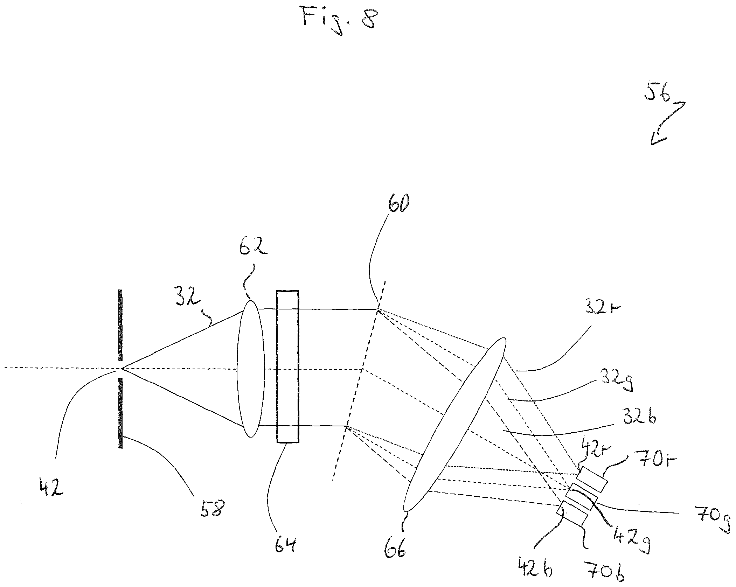

In Figur 8 ist eine Abwandlung des Detektormoduls 56 gezeigt, in der anstelle des Flächensensors 68 nach Figur 7 drei Liniendetektoren 70r, 70g und 70b vorgesehen sind, auf denen das rote Linienbild 42r, das grünen Linienbild 42g bzw. das blaue Linienbild 42b generiert werden. In dem gezeigten Ausführungsbeispiel sind die Liniendetektoren 70r, 70g und 70b so angeordnet, dass sich ihre lichtempfindlichen Sensorbereiche in einer gemeinsamen Ebene befinden. Insoweit entspricht die Anordnung nach Figur 8, in der die Linienbilder 42r, 42g und 42b in einer gemeinsamen Ebene erzeugt werden, der in Figur 7 gezeigten Ausführungsform. Gegenüber dieser ergibt sich jedoch der Vorteil einer höheren Flexibilität, sofern die Liniendetektoren 70r, 70g und 70b in Aufspaltungsrichtung des dispersiven Elementes 60 gegeneinander verschiebbar sind. Ist etwa eine besonders hohe spektrale Auflösung gewünscht, so werden die Liniendetektoren 70r, 70g und 70b in einem entsprechend großen Abstand voneinander angeordnet. Soll dagegen mit den einzelnen Liniendetektoren 70r, 70g und 70b jeweils ein besonders starkes Sensorsignal erzielt werden, so werden die durch das dispersive Element 60 bewirkte Aufspreizung des Detektionslichts 32 und damit der Abstand der Liniendetektoren 70r, 70g und 70b in Aufspaltungsrichtung entsprechend kleiner gewählt.

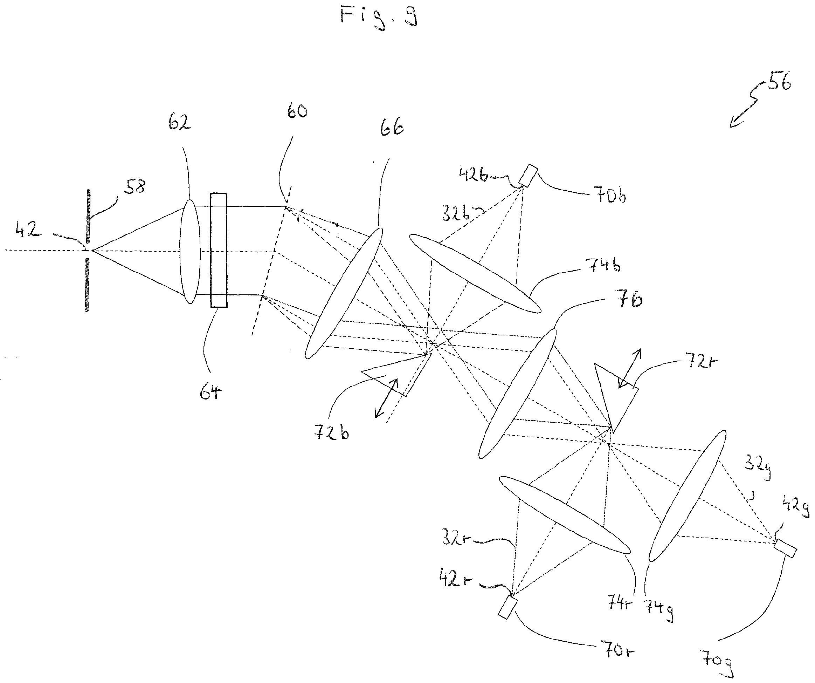

Eine Ausführungsform des Detektormoduls 56, die eine noch flexiblere spektrale Aufspaltung des Detektionslichts 32 und damit eine noch flexiblere Erzeugung der verschiedenen Linienbilder 42r, 42g und 42b ermöglicht, ist in Figur 9 gezeigt. In der Ausführungsform nach Figur 9 können die Liniendetektoren 70r, 70g und 70b nahezu beliebig im Raum verteilt werden. Um dies zu ermöglichen, verfügt das Detektormodul 56 über ein dem Liniendetektor 70b zugeordnetes Lichtumlenkelement 72b sowie ein dem Liniendetektor 70r zugeordnetes Lichtumlenkelement 72r. Die Lichtumlenkelemente 73b und 72r sind beispielsweise jeweils in Form eines Spiegels ausgeführt. Jedes der Lichtumlenkelemente 72r und 72b ist in einer Richtung, die der Aufspaltungsrichtung des dispersiven Elementes 60 entspricht, verschiebbar, wie in Figur 9 durch die Doppelpfeile angedeutet ist.

In der Anordnung nach Figur 9 fällt der durch das dispersive Element 60 erzeugte rote Spektralanteil 32r nach Durchtritt durch die Linse 66 sowie eine weitere Linse 76 auf das Lichtumlenkelement 72r. Durch dieses wird der rote Spektralanteil 32r auf eine anamorphotische Optik 74r, die beispielsweise als Zylinderlinse ausgeführt ist, reflektiert. Die anamorphotische Optik 74r ist dem Liniendetektor 70r vorgeordnet und hat in Richtung der Längserstreckung des Liniendetektors 70r eine Vergrößerung gleich 1. In dieser Richtung wirkt die anamorphotische Optik 74r also neutral. Demgegenüber wirkt sie in einer Richtung, die der Aufspaltungsrichtung des dispersiven Elementes 60 entspricht, verkleinernd. Dadurch ist sichergestellt, dass selbst dann, wenn die räumliche Ausdehnung des durch das Lichtumlenkelement 72r durch Reflexion abgegriffenen Spektralanteils 32r vergleichsweise groß ist, der Spektralanteil 32r in seiner Gesamtheit von dem Liniendetektor 70r erfasst wird, selbst wenn der Liniendetektor 70r in Aufspaltungsrichtung vergleichsweise schmal ist. Durch Verschieben des Lichtumlenkelementes 72r in Aufspaltungsrichtung des dispersiven Elementes 60 lässt sich die spektrale Breite des Spektralanteils 32r nach Wunsch einstellen.

Die auf den blauen Spektralanteil 32b bezogene, aus dem Liniendetektor 70b und dem verschiebbaren Lichtumlenkelement 72b gebildete Anordnung arbeitet in entsprechender Weise. Demnach wird der durch das dispersive Element 60 abgespaltene blaue Spektralanteil 32b nach Durchtritt durch die Linse 66 an dem Lichtumlenkelement 72b in Richtung einer anamorphotischen Optik 74b reflektiert, die wiederum als Zylinderlinse ausgebildet und dem Liniendetektor 70b vorgeordnet ist. Die anamorphotische Optik 74b arbeitet in Bezug auf den blauen Spektralanteil 32b in gleicher Weise wie die anamorphotische Optik 74r in Bezug auf den roten Spektralanteil 32r. Demnach sorgt die anamorphotische Optik 74b dafür, dass die gesamte spektrale Information des blauen Spektralanteils 32b, die durch das verschiebbare Lichtumlenkelement 72b aus dem Detektionslicht 32 abgegriffen wird, auf den Liniendetektor 70b komprimiert wird.

Der grüne Spektralanteil 32g passiert nach Durchtritt durch die Linse 66 das Lichtumlenkelement 72b und nach Durchtritt durch die Linse 76 auch das Lichtumlenkelement 72r. Anschließend wird der grüne Spektralanteil 32g in gleicher Weise, wie dies vorstehend für die beiden anderen Spektralanteile 32r und 32b erläutert wurde, durch eine anamorphotische Optik 32g auf den Liniendetektor 42g gebündelt. Durch die anamorphotische Optik 32g ist auch hier gewährleistet, dass die gesamte in dem grünen Spektralanteil 32g enthaltene spektrale Information von dem Liniendetektor 42g erfasst wird.

In der Anordnung nach Figur 9 sorgen die beiden Lichtumlenkelemente 72b und 72r dafür, dass die durch das dispersive Element 60 aufgespaltenen Spektralanteile von den beiden entgegengesetzten Randbereichen des aufgefächerten Lichtbündels her aus dem Detektionslicht 32 ausgekoppelt werden. Dies bedeutet, dass zunächst der in Figur 9 im unteren Randbereich des aufgefächerten Lichtbündels propagierende blaue Spektralanteil 32b durch das Lichtumlenkelement 72b in Richtung des Liniendetektors 70b und anschließend der im oberen Randbereich des Lichtbündels propagierende rote Spektralanteil 32r durch das Lichtumlenkelement 72r in Richtung des Liniendetektors 70r ausgekoppelt wird, bevor erst der zwischen diesen beiden Spektralanteilen liegende grüne Spektralanteil 32g unabgelenkt auf den Liniendetektor 70g fällt.

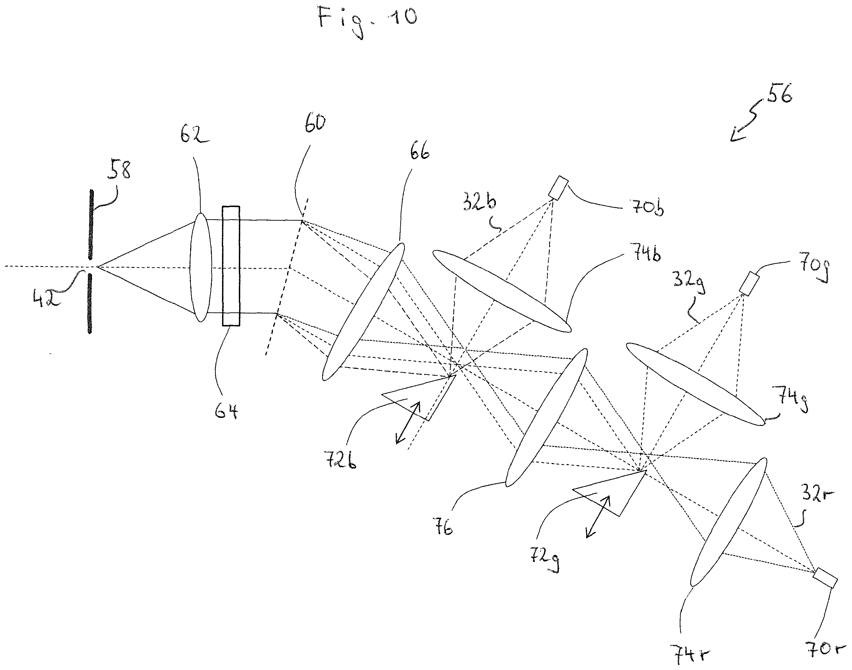

Demgegenüber zeigt Figur 10 eine Anordnung, in der die spektralen Anteile sukzessive von dem in Figur 9 unteren Randbereich her aus dem Detektionslicht 32 ausgekoppelt werden. So wird zunächst der blaue Spektralanteil 32b durch das Lichtumlenkelement 72b durch die anamorphotische Optik 74b hindurch auf den Liniendetektor 70b gerichtet. Anschließend fällt der grüne Spektralanteil 32g auf ein Lichtumlenkelement 72g und lenkt dieses durch eine anamorphotische Optik 74g auf den Liniendetektor 70g. Schließlich fällt der rote Spektralanteil 32r nach Durchtritt durch die Linsen 66, 76 und die anamorphotische Optik 74r unabgelenkt auf den Liniendetektor 70r.

In den Figuren 7 bis 10 wird das in der Probe 30 reflektierte Anregungslicht jeweils durch den Bandpassfilter 64 aus dem Detektionslicht 32 herausgefiltert. Ein solcher Bandpassfilter ist jedoch vergleichsweise teuer. Auch ist er nicht für unterschiedliche Anregungswellenlängen flexibel einsetzbar, d.h. er muss getauscht werden, wenn die Anregungswellenlänge variiert wird. Schließlich weist ein solcher Bandpassfilter eine gewisse Mindestbandbreite auf, die zu Lichtverlusten in der detektierten Fluoreszenzstrahlung führen kann.

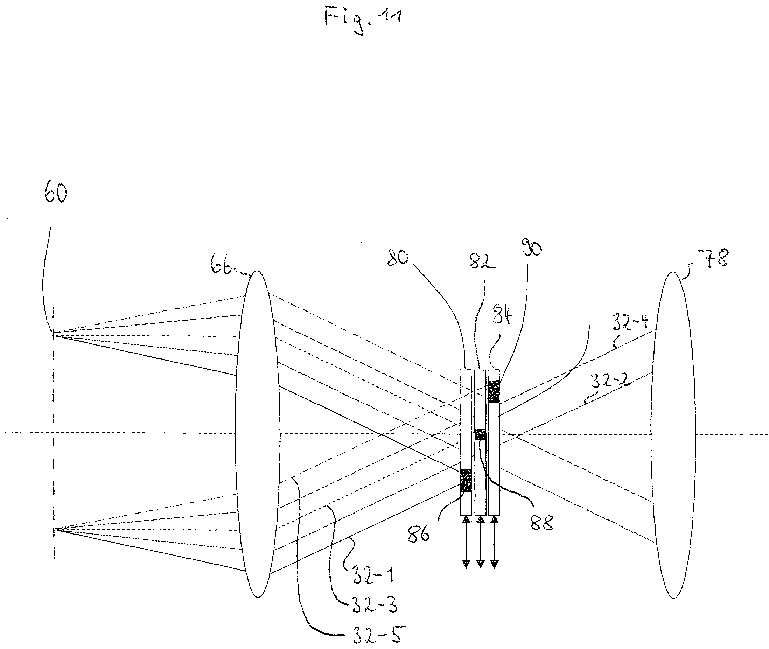

Eine Anordnung, die ohne Bandpassfilter auskommt und deshalb die vorstehend genannten Probleme vermeidet, ist in Figur 11 dargestellt. Anstelle eines Bandpassfilters werden dort mehrere Lichtsperrelemente 80, 82 und 84 verwendet, die dem dispersiven Element 60 nachgeordnet sind. Die Lichtsperrelemente 80, 82 und 84 sind jeweils in Form eines transparenten Substrats ausgebildet, das einen das Anregungslicht absorbierenden oder reflektierenden Bereich 86, 88 bzw. 90 aufweist. Wie in Figur 11 durch die Doppelpfeile angedeutet, sind die Lichtsperrelemente 80, 82 und 84 in Aufspaltungsrichtung des dispersiven Elementes 60 gegeneinander verschiebbar. Dadurch lassen die lichtabsorbierenden oder -reflektierenden Bereiche 86, 88 und 90 beliebig innerhalb des aufgefächerten Detektionslichts 32 positionieren, um diejenigen Spektralanteile herauszufiltern, die das an der Probe 30 reflektierte Anregungslicht repräsentieren. In dem Beispiel nach Figur 11 sind dies die mit 32-1, 32-3 und 32-5 bezeichneten Spektralanteile. Demgegenüber sind die durch die Lichtsperrelemente 80, 82 und 84 transmittierten Spektralanteile in Figur 11 mit 32-2 und 32-4 bezeichnet. Sie werden nach Durchtritt durch eine weitere Linse 78 in vorher beschriebener Weise einem oder mehreren Detektoren zugeführt.

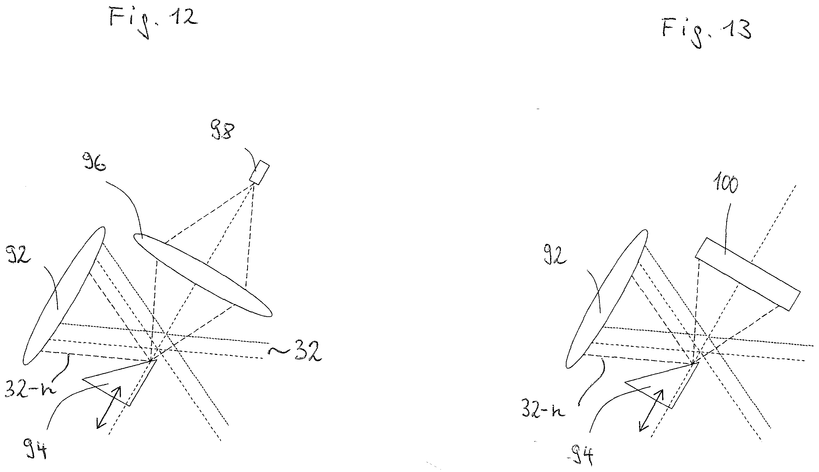

In den in den Figuren 7 bis 10 dargestellten Ausführungsformen werden jeweils ein Flächendetektor bzw. drei Liniendetektoren eingesetzt. Es versteht sich jedoch von selbst, dass das Detektormodul 56 auch eine andere, insbesondere höhere Zahl an Detektoren aufweisen kann. In der Darstellung nach Figur 12 ist aus den in den Figuren 9 und 10 gezeigten Anordnungen eine Funktionseinheit herausgegriffen, die mehrfach hintereinander geschaltet zum Aufbau eines Detektormoduls eingesetzt werden kann, das eine beliebige Zahl an Detektoren aufweist. Die Funktionseinheit nach Figur 12 umfasst eine Linse 92, durch die verschiedene (noch nicht durch eine vorhergehende Funktionseinheit ausgekoppelte) Spektralanteile des Detektionslichts 32 treten. Einer dieser Spektralanteile, der in Figur 12 mit 32-n bezeichnet ist, fällt auf ein in Aufspaltungsrichtung des dispersiven Elementes 60 verschiebbares Lichtumlenkelement 94. Durch Reflexion an dem Lichtumlenkelement 94 wird der Spektralanteil 32-n aus dem Detektionslicht 32 in Richtung einer anamorphotischen Optik 96 ausgekoppelt. Die anamorphotische Optik 96 komprimiert dann den Spektralanteil 32-n in oben beschriebener Weise auf einen Detektor 98, der als Liniendetektor oder Flächendetektor ausgebildet sein kann.

Eine weitere Funktionseinheit, die zum sequenziellen Aufbau eines Detektormoduls verwendet werden kann, ist in Figur 13 dargestellt. Dies Funktionseinheit enthält anstelle der anamorphotischen Optik 96 und dem Detektor 98 eine mit 100 bezeichnete Lichtfalle, die den durch das Lichtumlenkelement 94 ausgekoppelten Spektralanteil 32-n absorbiert. Die Funktionseinheit nach Figur 13 kann typischerweise zwischen zwei Einheiten der in Figur 12 gezeigten Art verwendet werden, um nicht interessierende Wellenlängenbereiche auszublenden. Insbesondere ist es mit der in Figur 13 dargestellten Funktionseinheit auch möglich, das in dem Detektionslicht enthaltene, an der Probe 30 reflektierte Anregungslicht herauszufiltern.

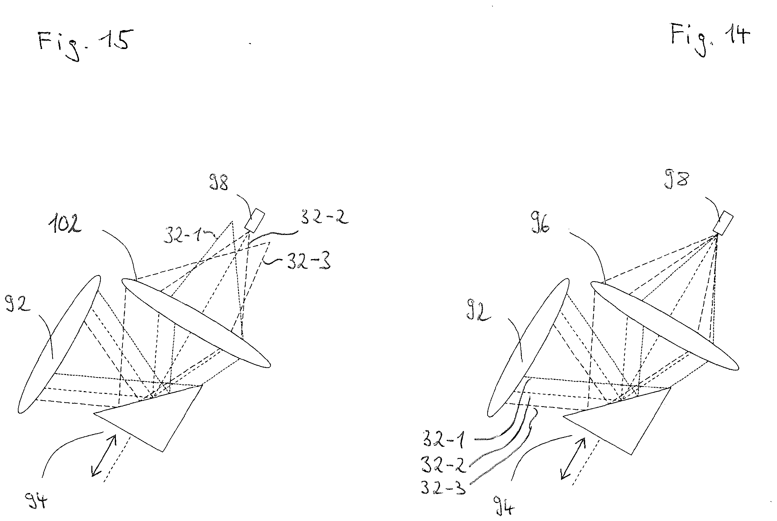

In den Figuren 14 und 15 ist nochmals die Funktionsweise der anamorphotischen Optik 96 veranschaulicht, die Teil der in Figur 12 dargestellten Funktionseinheit ist. Wie Figur 14 zeigt, sorgt die anamorphotische Optik 96 dafür, dass sämtliche mit 32-1, 32-2 und 32-3 bezeichneten Spektralanteile, die in ihrer Gesamtheit auf dem Lichtumlenkelement 94 in Aufspaltungsrichtung des dispersiven Elementes 60 einen vergleichsweisen großen Raum einnehmen, auf den Detektor komprimiert werden. Demgegenüber ist in Figur 15 ein Vergleichsbeispiel dargestellt, in dem anstelle einer anamorphotischen Optik 96 eine übliche Linse 102 verwendet wird. In dem Beispiel nach Figur 15 ist die Linse 102 nicht im Stande, die Spektralanteile 32-1 und 32-3 auf den Detektor 98 zu richten.

## Patentansprüche

1. Lichtmikroskop (10), umfassend:
eine Scan-Beleuchtungseinheit (48), die ausgebildet ist, eine Probe (30) mit einem aus einem Beleuchtungslichtstrahl (16) erzeugten und quer zur Lichtausbreitungsrichtung bewegten Linienfokus (A) zu beleuchten, und
eine Descanned-Detektionseinheit (50), die ausgebildet ist, aus Detektionslicht (32), das aus einem mit dem bewegten Linienfokus (A) beleuchteten Zielbereich der Probe (30) stammt, ein ortsfestes erstes Linienbild (42) des Zielbereichs zu erzeugen,
wobei die Scan-Beleuchtungseinheit (48) und die Descanned-Detektionseinheit (50) ein gemeinsames Objektiv (28) aufweisen, das ausgebildet ist, sowohl den Beleuchtungslichtstrahl (16) als auch das Detektionslicht (32) zu empfangen,
wobei die Descanned-Detektionseinheit (50) ein dispersives Element (60) enthält, das ausgebildet ist, das Detektionslicht (32) spektral aufzuspalten, um mehrere dem ersten Linienbild (42) entsprechende zweite Linienbilder (42r, 42g, 42b) unterschiedlicher spektraler Zusammensetzung zu erzeugen,
wobei die Descanned-Detektionseinheit (50) mindestens ein Lichtsperrelement (64, 80, 82, 84) enthält, das spektrale Anteile des Detektionslichtes (32), die im Wellenlängenbereich des Beleuchtungslichtstrahls (16) liegen, sperrt, und
die Scan-Beleuchtungseinheit (48) und die Descanned-Detektionseinheit (50) ein gemeinsames Lichtablenkelement (20) aufweisen, das zum Scannen des Beleuchtungslichtstrahls (16) und zum Entscannen des Detektionslichtes um zwei senkrecht zueinander liegende Achsen (x, y) drehbar ist,
**dadurch gekennzeichnet, dass** das Lichtablenkelement (20) ein 2D-Scanspiegel ist, der in einer zur hinteren Brennebene des Objektivs (28) konjugierten Ebene angeordnet ist, und
das mindestens eine Lichtsperrelement (80, 82, 84) dem dispersiven Element (60) nachgeordnet und in Aufspaltungsrichtung des dispersiven Elementes (60) verschiebbar ist.

2. Lichtmikroskop (10) nach Anspruch 1, **dadurch gekennzeichnet, dass** die Aufspaltungsrichtung des dispersiven Elementes (60) senkrecht zur Längserstreckung des ersten Linienbildes (42) liegt.

3. Lichtmikroskop (10) nach Anspruch 1 oder 2, **dadurch gekennzeichnet, dass** die Descanned-Detektionseinheit (50) ein optisches Element (62) enthält, das ausgebildet ist, das Licht des ersten Linienbildes (42) auf das dispersive Element (60) zu lenken.

4. Lichtmikroskop (10) nach Anspruch 3, **dadurch gekennzeichnet, dass** die Descanned-Detektionseinheit (50) eine Spaltblende (58) aufweist, die am Ort des ersten Linienbildes (42) angeordnet ist.

5. Lichtmikroskop (10) nach einem der vorhergehenden Ansprüche, **dadurch gekennzeichnet, dass** die Descanned-Detektionseinheit (50) zur Erfassung der zweiten Linienbilder (42r, 42g, 42b) mindestens einen als Flächendetektor (68) ausgebildeten Sensor enthält, auf dem die zweiten Linienbilder (42r, 42g, 42b) parallel zueinander erzeugt werden.

6. Lichtmikroskop (10) nach einem der vorhergehenden Ansprüche, **dadurch gekennzeichnet, dass** die Descanned-Detektionseinheit (50) zur Erfassung der zweiten Linienbilder (42r, 42g, 42b) mehrere jeweils als Liniendetektor (70r, 70g, 70b) ausgebildete Sensoren enthält, auf denen jeweils eines der zweiten Linienbilder (42r, 42g, 42b) erzeugt wird.

7. Lichtmikroskop (10) nach Anspruch 5 oder 6, **dadurch gekennzeichnet, dass** die Descanned-Detektionseinheit (50) mindestens eine anamorphotische Optik (74r, 74g, 74b) enthält, die einem der Sensoren (68, 70r, 70g, 70b) vorgeordnet ist und deren optische Wirkung in Aufspaltungsrichtung des dispersiven Elementes (60) der Ausdehnung des Sensors (68, 70r, 70g, 70b) in Aufspaltungsrichtung angepasst ist.

8. Lichtmikroskop (10) nach Anspruch 6 oder 7, **dadurch gekennzeichnet, dass** die Liniendetektoren (70r, 70g, 70b) in einer Ebene parallel zueinander angeordnet sind.

9. Lichtmikroskop (10) nach einem der Ansprüche 5 bis 8, **dadurch gekennzeichnet, dass** mindestens einer der genannten Sensoren (68, 70r, 70g, 70b) in einer Richtung verschiebbar ist, die der Aufspaltungsrichtung des dispersiven Elementes (60) entspricht.

10. Lichtmikroskop (10) nach einem der Ansprüche 5 bis 9, **dadurch gekennzeichnet, dass** die Descanned-Detektionseinheit (50) mindestens ein Lichtumlenkelement (72r, 72g, 72b) enthält, das einen Teil des durch das dispersive Element (60) aufgespaltenen Detektionslichtes (32) auf einen der Sensoren (68, 70r, 70g, 70b) umlenkt und vorzugsweise einer Richtung verschiebbar ist, die der Aufspaltungsrichtung des dispersiven Elementes (60) entspricht.

11. Lichtmikroskop (10) nach Anspruch 10, **gekennzeichnet durch** mehrere Lichtumlenkelemente (72r, 72g, 72b), die das aufgespaltene Detektionslicht (32) sukzessive von einer Seite her oder abwechselnd von zwei entgegengesetzten Seiten her jeweils auf einen der Sensoren (68, 70r, 70g, 70b) umlenken.

12. Lichtmikroskop (10) nach einem der vorhergehenden Ansprüche, **dadurch gekennzeichnet, dass** das dispersive Element (60) ein Prisma, ein Beugungsgitter oder ein räumlicher Lichtmodulator ist.

13. Verfahren zur lichtmikroskopischen Abbildung einer Probe, bei dem:
mittels einer Scan-Beleuchtungseinheit (48) die Probe mit einem aus einem Beleuchtungslichtstrahl (16) erzeugten und senkrecht zur Lichtausbreitungsrichtung bewegten Linienfokus (A) beleuchtet wird, und
mittels einer Descanned-Detektionseinheit (50) aus Detektionslicht (32), das aus einem mit dem bewegten Linienfokus (A) beleuchteten Zielbereichs der Probe (30) stammt, ein ortsfestes erstes Linienbild (42) des Zielbereichs erzeugt wird,
wobei für die Scan-Beleuchtungseinheit (48) und die Descanned-Detektionseinheit (50) ein gemeinsames Objektiv (28) verwendet wird, durch das sowohl der Beleuchtungslichtstrahl (16) als auch das Detektionslicht (32) empfangen werden,
mittels eines in der Descanned-Detektionseinheit (50) enthaltenen dispersiven Elementes (60) das Detektionslicht (32) spektral aufgespalten wird, um mehrere dem ersten Linienbild (42) entsprechende zweite Linienbilder (42r, 42g, 42b) unterschiedlicher spektraler Zusammensetzung zu erzeugen,
mittels mindestens eines in der Descanned-Detektionseinheit (50) enthaltenen Lichtsperrelementes (64, 80, 82, 84) spektrale Anteile des Detektionslichtes (32), die im Wellenlängenbereich des Beleuchtungslichtstrahls (16) liegen, gesperrt werden,
wobei die Scan-Beleuchtungseinheit (48) und die Descanned-Detektionseinheit (50) ein gemeinsames Lichtablenkelement (20) aufweisen, das zum Scannen des Beleuchtungslichtstrahls (16) und zum Entscannen des Detektionslichtes um zwei senkrecht zueinander liegende Achsen (x, y) drehbar ist,
**dadurch gekennzeichnet, dass** das Lichtablenkelement (20) ein 2D-Scanspiegel ist, der in einer zur hinteren Brennebene des Objektivs (28) konjugierten Ebene angeordnet ist, und
das mindestens eine Lichtsperrelement (80, 82, 84) dem dispersiven Element (60) nachgeordnet und in Aufspaltungsrichtung des dispersiven Elementes (60) verschiebbar ist.

## Claims

1. A light microscope (10), comprising:
a scan illumination unit (48) configured to illuminate a specimen (30) with a line focus (A) produced from an illumination light beam (16) and moved transversely to a light propagation direction, and
a descanned detection unit (50) configured to produce a stationary first line image (42) of the target region from detection light (32) that originates from a target region of the specimen (30) illuminated with the moving line focus (A),
wherein the scan illumination unit (48) and the descanned detection unit (50) have a common objective (28) which is configured to receive both the illumination light beam (16) and the detection light (32),
wherein the descanned detection unit (50) includes a dispersive element (60) which is configured to spectrally split the detection light (32) in order to generate multiple second line images (42r, 42g, 42b) of different spectral composition, which second line images correspond to the first line image (42),
wherein the descanned detection unit (50) includes at least one light blocking element (64, 80, 82, 84) which blocks spectral components of the detection light (32) that are within the wavelength range of the illumination light beam (16), and
the scan illumination unit (48) and the descanned detection unit (50) have a common light deflecting element (20) which is rotatable about two axes (x, y) lying perpendicular to each other for scanning the illumination light beam (16) and for descanning the detection light,
**characterized in that** the light deflecting element (20) is a 2D scanning mirror which is arranged in a plane conjugated with respect to the rear focal plane of the objective (28), and
the at least one light blocking element (80, 82, 84) is arranged downstream of the dispersive element (60) and is displaceable in the splitting direction of the dispersive element (60).

2. The light microscope (10) according to claim 1, **characterized in that** the splitting direction of the dispersive element (60) lies perpendicular to the longitudinal extension of the first line image (42).

3. The light microscope (10) according to claim 1 or 2, **characterized in that** the descanned detection unit (50) includes an optical element (62) which is configured to direct the light of the first line image (42) onto the dispersive element (60).

4. The light microscope (10) according to claim 3, **characterized in that** the descanned detection unit (50) has a slit diaphragm (58) located at the location of the first line image (42).

5. The light microscope (10) according to one of the preceding claims, **characterized in that** the descanned detection unit (50) includes for detecting the second line images (42r, 42g, 42b) at least one sensor which is formed as an area detector (68) and on which the second line images (42r, 42g, 42b) are generated parallel to each other.

6. The light microscope (10) according to one of the preceding claims, **characterized in that** the descanned detection unit (50) includes for detecting the second line images (42r, 42g, 42b) several sensors, each formed as a line detector (70r, 70g, 70b) and on which one of the second line images (42r, 42g, 42b) is generated each.

7. The light microscope (10) according to claim 5 or 6, **characterized in that** the descanned detection unit (50) includes at least one anamorphic optical system (74r, 74g, 74b) which is arranged upstream of one of the sensors (68, 70r, 70g, 70b) and the optical effect of which in the splitting direction of the dispersive element (60) is adapted to the extension of the sensor (68, 70r, 70g, 70b) in splitting direction.

8. The light microscope (10) according to claim 6 or 7, **characterized in that** the line detectors (70r, 70g, 70b) are arranged in one plane parallel to each other.

9. The light microscope (10) according to one of the claims 5 to 8, **characterized in that** at least one of said sensors (68, 70r, 70g, 70b) is displaceable in a direction that corresponds to the splitting direction of the dispersive element (60).

10. The light microscope (10) according to one of the claims 5 to 9, **characterized in that** the descanned detection unit (50) includes at least one light deflection element (72r, 72g, 72b) that deflects a part of the detection light (32) split by the dispersive element (60) onto one of the sensors (68, 70r, 70g, 70b) and is preferably displaceable in a direction that corresponds to the splitting direction of the dispersive element (60).

11. The light microscope (10) according to claim 10, **characterized by** several light deflecting elements (72r, 72g, 72b) that deflect the split detection light (32) successively from one side or alternately from two opposite sides each time onto one of the sensors (68, 70r, 70g, 70b) .

12. The light microscope (10) according to one of the preceding claims, **characterized in that** the dispersive element (60) is a prism, a diffraction grating or a spatial light modulator.

13. A method for light-microscopic imaging of a specimen, in which:
by means of a scan illumination unit (48) the specimen is illuminated with a line focus (A) produced from an illumination light beam (16) and moved perpendicular to the light propagation direction, and
by means of a descanned detection unit (50) a stationary first line image (42) of the target region is produced from detection light (32) originating from a target region of the specimen (30) illuminated with the moving line focus (A),
wherein a common objective (28) is used for the scan illumination unit (48) and the descanned detection unit (50), by which objective both the illumination light beam (16) and the detection light (32) are received,
by means of a dispersive element (60) included in the descanned detection unit (50) the detection light (32) is spectrally split in order to generate multiple second line images (42r, 42g, 42b) of different spectral composition, which second line images correspond to the first line image (42),
by means of at least one light blocking element (64, 80, 82, 84) that is included in the descanned detection unit (50) spectral components of the detection light (32) that are within the wavelength range of the illumination light beam (16) are blocked,
wherein the scan illumination unit (48) and the descanned detection unit (50) have a common light deflecting element (20) which is rotatable about two axes (x, y) lying perpendicular to each other for scanning the illumination light beam (16) and for descanning the detection light,
**characterized in that** the light deflecting element (20) is a 2D scanning mirror which is arranged in a plane conjugated with respect to the rear focal plane of the objective (28), and
the at least one light blocking element (80, 82, 84) is arranged downstream of the dispersive element (60) and is displaceable in the splitting direction of the dispersive element (60).

## Revendications

1. Microscope optique (10) comprenant :
une unité d'éclairage à balayage (48) qui est conçue pour éclairer un échantillon (30) avec un foyer de lignes (A) généré à partir d'un faisceau de lumière d'éclairage (16) et déplacé transversalement à la direction de propagation de la lumière, et
une unité de détection dé-balayée (50) qui est conçue pour générer une première image de lignes fixe (42) de la zone cible à partir d'une lumière de détection (32) qui provient d'une zone cible de l'échantillon (30) qui est éclairée avec le foyer de lignes déplacé (A),
l'unité d'éclairage à balayage (48) et l'unité de détection dé-balayée (50) comportant un objectif commun (28) qui est conçu pour recevoir aussi bien le faisceau de lumière d'éclairage (16) que la lumière de détection (32),
l'unité de détection dé-balayée (50) contenant un élément dispersif (60) qui est conçu pour diviser spectralement la lumière de détection (32) afin de générer plusieurs deuxièmes images de lignes (42r, 42g, 42b), de composition spectrale différente, qui correspondent à la première image de lignes (42),
l'unité de détection dé-balayée (50) contenant au moins un élément de blocage de lumière (64, 80, 82, 84) qui bloque les composantes spectrales de la lumière de détection (32) qui sont situées dans la gamme de longueurs d'onde du faisceau de lumière d'éclairage (16), et
l'unité d'éclairage à balayage (48) et l'unité de détection dé-balayée (50) comportant un élément de déviation de lumière commun (20) qui peut tourner sur deux axes (x, y) perpendiculaires l'un à l'autre pour balayer le faisceau de lumière d'éclairage (16) et pour balayer la lumière de détection,
**caractérisé en ce que** l'élément de déviation de lumière (20) est un miroir de balayage 2D qui est disposé dans un plan conjugué par rapport au plan focal arrière de l'objectif (28), et
l'au moins un élément de blocage de lumière (80, 82, 84) est disposé en aval de l'élément dispersif (60) et peut être déplacé dans la direction de séparation de l'élément dispersif (60).

2. Microscope optique (10) selon la revendication 1, **caractérisé en ce que** la direction de séparation de l'élément dispersif (60) est perpendiculaire à l'extension longitudinale de la première image de lignes (42) .

3. Microscope optique (10) selon la revendication 1 ou 2, **caractérisé en ce que** l'unité de détection dé-balayée (50) contient un élément optique (62) qui est conçu pour diriger la lumière de la première image de lignes (42) sur l'élément dispersif (60).

4. Microscope optique (10) selon la revendication 3, **caractérisé en ce que** l'unité de détection dé-balayée (50) comporte un diaphragme à fente (58) qui est disposé à l'emplacement de la première image de lignes (42).

5. Microscope optique (10) selon l'une des revendications précédentes, **caractérisé en ce que**, pour détecter les deuxièmes images de lignes (42r, 42g, 42b), l'unité de détection dé-balayée (50) contient au moins un capteur qui est conçu comme un détecteur de surface (68) et sur lequel les deuxièmes images de lignes (42r, 42g, 42b) sont générées parallèlement les unes aux autres.

6. Microscope optique (10) selon l'une des revendications précédentes, **caractérisé en ce que**, pour détecter les deuxièmes images de lignes (42r, 42g, 42b), l'unité de détection dé-balayée (50) contient plusieurs capteurs qui sont conçus chacun comme un détecteur de lignes (70r, 70g, 70b) et sur chacun desquels est générée une des deuxièmes images de lignes (42r, 42g, 42b).

7. Microscope optique (10) selon la revendication 5 ou 6, **caractérisé en ce que** l'unité de détection dé-balayée (50) contient au moins une optique anamorphique (74r, 74g, 74b) qui est disposée en amont de l'un des capteurs (68, 70r, 70g, 70b) et dont l'effet optique dans la direction de séparation de l'élément dispersif (60) est adapté à l'extension du capteur (68, 70r, 70g, 70b) dans la direction de séparation.

8. Microscope optique (10) selon la revendication 6 ou 7, **caractérisé en ce que** les détecteurs de lignes (70r, 70g, 70b) sont disposés parallèlement les uns aux autres dans un même plan.

9. Microscope optique (10) selon l'une des revendications 5 à 8, **caractérisé en ce qu'**au moins un desdits capteurs (68, 70r, 70g, 70b) est déplaçable dans une direction qui correspond à la direction de séparation de l'élément dispersif (60).

10. Microscope optique (10) selon l'une des revendications 5 à 9, **caractérisé en ce que** l'unité de détection dé-balayée (50) contient au moins un élément de déviation de lumière (72r, 72g, 72b) qui dévie une partie de la lumière de détection (32) divisée par l'élément dispersif (60) vers l'un des capteurs (68, 70r, 70g, 70b) et qui est de préférence déplaçable dans une direction qui correspond à la direction de séparation de l'élément dispersif (60).

11. Microscope optique (10) selon la revendication 10, **caractérisé par** plusieurs éléments de déviation de lumière (72r, 72g, 72b) qui dirigent la lumière de détection séparée (32) successivement depuis un côté ou alternativement depuis deux côtés opposés sur l'un des capteurs (68, 70r, 70g, 70b).

12. Microscope optique (10) selon l'une des revendications précédentes, **caractérisé en ce que** l'élément dispersif (60) est un prisme, un réseau de diffraction ou un modulateur de lumière spatial.

13. Procédé de reproduction photo-microscopique d'un échantillon, procédé dans lequel :
l'échantillon est éclairé, au moyen d'une unité d'éclairage à balayage (48), avec un foyer de lignes (A) généré à partir d'un faisceau de lumière d'éclairage (16) et déplacé perpendiculairement à la direction de propagation de la lumière, et
une image de première ligne fixe (42) de la zone cible est générée au moyen d'une unité de détection dé-balayée (50) à partir d'une lumière de détection (32) qui provient d'une zone cible de l'échantillon (30) qui est éclairée avec le foyer de lignes déplacé (A),
un objectif commun (28), qui permet de recevoir aussi bien le faisceau de lumière d'éclairage (16) que la lumière de détection (32), est utilisé pour l'unité d'éclairage à balayage (48) et l'unité de détection dé-balayée (50),
la lumière de détection (32) est séparée spectralement au moyen d'un élément dispersif (60) contenu dans l'unité de détection dé-balayée (50) afin de générer plusieurs deuxièmes images de lignes (42r, 42g, 42b), de composition spectrale différente, qui correspondent à la première image de lignes (42),
des composantes spectrales de la lumière de détection (32), qui sont situées dans la gamme de longueurs d'onde du faisceau de lumière d'éclairage (16), sont bloquées au moyen d'au moins un élément de blocage de lumière (64, 80, 82, 84) contenu dans l'unité de détection dé-balayée (50),
l'unité d'éclairage à balayage (48) et l'unité de détection dé-balayée (50) comportant un élément de déviation de lumière commun (20) qui peut tourner sur deux axes (x, y) perpendiculaires l'un à l'autre pour balayer le faisceau de lumière d'éclairage (16) et pour dé-balayer la lumière de détection,
**caractérisé en ce que** l'élément de déviation de lumière (20) est un miroir de balayage 2D qui est disposé dans un plan conjugué par rapport au plan focal arrière de l'objectif (28), et
l'au moins un élément de blocage de lumière (80, 82, 84) est disposé en aval de l'élément dispersif (60) et peut être déplacé dans la direction de séparation de l'élément dispersif (60).
